# EUROPÄISCHE PATENTSCHRIFT

(11) **EP 1 759 104 B1**
(45) Veröffentlichungstag und Bekanntmachung des Hinweises auf die Patenterteilung: **07.05.2008**
(21) Anmeldenummer: 05728195.8
(22) Anmeldetag: 30.03.2005
(51) Int. Cl.: F02D 41/00

(54) **VERFAHREN ZUR STEUERUNG EINER BRENNKRAFTMASCHINE MIT EINER AUFLADEVORRICHTUNG**
METHOD FOR CONTROLLING A SUPERCHARGED INTERNAL COMBUSTION ENGINE
PROCEDE DE COMMANDE D'UN MOTEUR A COMBUSTION INTERNE EQUIPE D'UN DISPOSITIF DE SURALIMENTATION

(30) Priorität: 24.06.2004 DE 102004030605
(43) Veröffentlichungstag der Anmeldung: 07.03.2007
(73) Patentinhaber: VDO Automotive AG, 93055 Regensburg (DE)
(72) Erfinder: ESER, Gerhard, 93155 Hemau (DE); ZHANG, Hong, 93105 Tegernheim (DE)
(86) Internationale Anmeldenummer: PCT/EP2005/051436
(87) Internationale Veröffentlichungsnummer: WO 2006/000472

(56) Entgegenhaltungen:
- EP-A- 1 091 106
- DE-B3- 10 256 474
- US-A- 4 683 857
- US-B1- 6 474 323

## Beschreibung

Die vorliegende Erfindung betrifft ein Verfahren zur Steuerung einer Brennkraftmaschine mit einer Aufladevorrichtung.

Aus DE 100 50 059 A1 ist eine Zylinderluftfüllungssteuerung bekannt, die abhängig von einem geforderten Drehmoment Ein- und Auslassventile verstellt. Bei der Verwendung eines Turboladers wird daher vorgeschlagen, zur Vermeidung der Verzögerung bei einer Drehmomenterhöhung die Steuervorrichtung für Ein- und Auslassventile gleichzeitig zu öffnen, sodass bei positiver Druckdifferenz zwischen Ansaug- und Abgasseite ein Durchspülen von Ansaugluft zur Abgasseite auftritt.

Aus DE 100 51 416 A1 ist ein Verfahren zur Steuerung einer Brennkraftmaschine bekannt, die eine elektronisch gesteuerte Einlass- und Auslassvorrichtung besitzt. Um eine rasche Veränderung des Luft-/Kraftstoffverhältnisses in den einzelnen Zylindern zu erzielen, wird die Auslassregelvorrichtung zur Steuerung des Luftstroms aus dem Ansaugkrümmer in den Zylinder eingesetzt.

Aus DE 100 51 425 A1 ist ein Motorsteuersystem für einen Direkteinspritzer mit veränderlicher Ventilsteuerzeit bekannt. Bei dem Verfahren wird mit Hilfe einer Nockensteuerung die Frischluftladung in den Zylinder schneller gesteuert, als dies allein durch die Krümmerdynamik möglich ist. Das Verfahren erfasst ebenfalls die Änderung des Luft-/Kraftstoffverhältnisses in dem Zylinder und ändert die Ansteuerung der Auslasssteuervorrichtung dementsprechend. Zur Kompensation von fehlerhaften Berechnungen ist ein Krümmungsdrucksensor vorgesehen, der einen Krümmungsdruckfehler aus der Abweichung zwischen ermitteltem Krümmerdruck und aktuellem Krümmerdruck berechnet.

Aus EP 1 243 779 A2 ist eine direkteinspritzende Brennkraftmaschine mit einem Turbolader zur Senkung des Verbrauchs insbesondere im Voll-Lastbetrieb bekannt, bei der zur Vermeidung von Klopfgeräuschen Restgas aus dem Zylinder herausgespült wird. Hierzu werden Einlass- und Auslassventil gleichzeitig geöffnet.

Den vorbeschriebenen Verfahren ist der Nachteil gemeinsam, dass durch den Spülvorgang kein direkter Zusammenhang zwischen der gemessenen (und daraus produzierten) Luftmasse, die in den Zylinder strömt und der tatsächlich im Zylinder verbleibenden Luftmasse besteht. Durch Berücksichtigung des sogenannten "Schluckverhaltens" des Zylinders wird versucht, dieses Problem zu lösen. Bei dem Schluckverhalten wird beispielsweise die in den Zylinder einströmende Frischluftmasse in Abhängigkeit von dem Saugrohr aufgetragen. Auch andere Betriebsgrößen können dabei berücksichtigt werden.

Der vorliegenden Erfindung liegt die Aufgabe zugrunde, ein Verfahren bereitzustellen, das die Genauigkeit erhöht, mit der während und/oder nach einem Spülvorgang die tatsächlich im Zylinder verbleibende Luftmasse bestimmt werden kann.

Erfindungsgemäß wird die Aufgabe durch ein Verfahren mit den Merkmalen gemäß Anspruch 1 gelöst. Vorteilhafte Ausgestaltung bilden den Gegenstand der Unteransprüche.

Bei dem erfindungsgemäßen Verfahren zur Steuerung einer Brennkraftmaschine mit einer Aufladevorrichtung wird bei einer Abweichung des Lambda-Ist-Werts von einem vorberechneten Lambda-Wert für eine Ventilüberschneidung der Gaswechselventile der Wert für den Abgasgegendruck abhängig von der festgestellten Abweichung korrigiert. Mit einem korrigierten Wert für den Abgasgegendruck wird die Luftmasse in dem Zylinder bestimmt. Dem erfindungsgemäßen Verfahren liegt die Erkenntnis zugrunde, dass im Falle einer Abweichung des Lambda-Signals vom Sollwert die Ursache hauptsächlich durch einen fehlerhaften Wert für den Abgasgegendruck hervorgerufen wird. Das erfindungsgemäße Verfahren verfolgt also den Ansatz, eine Korrektur des volumetrischen Wirkungsgrades, sogenanntes Schluckverhalten, durch Adaption des während des Spülens auftretenden Abgasgegendrucks vorzunehmen. Das erfindungsgemäße Verfahren bietet den Vorteil, dass der ursächliche Grund für die Berechnung des Lambda-Ist-Werts zum Sollwert korrigiert wird, wodurch eine verbesserte Ansteuerung beispielsweise des Wastegates für den Turbolader erfolgen kann. Auch ist die Luftmasse und die Zylindermasse bei dem erfindungsgemäßen Verfahren genauer bestimmt, was zu einer besseren Einhaltung des vorberechneten Werts für das Verbrennungslambda führt.

Die Korrektur des Werts für den Abgasgegendruck kann sowohl synchron als auch nachfolgend zu dem Spülvorgang erfolgen. Während des Spülvorgangs sind die Gaswechselventile gleichzeitig geöffnet. Bei der synchronen Korrektur wird der Wert des Abgasgegendrucks während der Ventilüberschneidung der Gaswechselventile geändert. Bei der nachfolgenden Korrektur wird der Wert des Abgasgegendrucks für die nachfolgenden Ventilüberschneidungen korrigiert.

Die Korrektur für den Wert des Abgasgegendrucks erfolgt, wenn der Ansaugdruck im Saugrohr während der Ventilüberschneidung größer als der Abgasgegendruck ist. Bei dieser Bedingung erfolgt ein Spülen der Verbrennungsgase aus dem Brennraum durch einen Luftstrom, der von der Ansaugseite durch den Brennraum zur Abgasseite erfolgt. Zur Feststellung, ob die für das Spülen geeigneten Parameter vorliegen, wird der Quotient aus Saugrohrdruck und Abgasgegendruck mit einem vorbestimmten Schwellenwert verglichen. Liegt der Quotient oberhalb des Schwellenwerts, so liegt die Bedingung für ein Spülen vor. Alternativ oder zusätzlich kann als Bedingung für das Spülen auch die Differenz aus Saugrohrdruck und Abgasgegendruck mit einem vorbestimmten Schwellenwert verglichen werden.

Der Wert für den Abgasgegendruck wird durch ein Steuermodul berechnet, das als Eingangsgrößen die Frischluftmasse, die Einspritzmasse und die Position eines Wastegates aufweist.

Bei dem erfindungsgemäßen Verfahren erfolgt die Korrektur des Werts für den Abgasgegendruck dahingehend, dass der Wert vermindert wird, wenn der Lambda-Ist-Wert kleiner als der vorbestimmte Lambda-Sollwert ist. Geht man davon aus, dass die Abweichung im Lambda-Wert im Wesentlichen durch eine Abweichung in der Luftmasse auftritt, so bedeutet ein zu kleiner Lambda-Ist-Wert, dass insgesamt zu wenig Frischluft in dem Brennraum vorhanden war. Die einströmende Frischluft ist also unterschätzt worden, sodass bezogen auf den Abgasgegendruck dieser Wert zu hoch angesetzt wurde. Zur Korrektur wird also der Wert für den Abgasgegendruck vermindert. Aus derselben Überlegung heraus wird der Wert für den Abgasgegendruck erhöht, wenn der Lambda-Ist-Wert größer als der Lambda-Sollwert ist.

Eine bevorzugte Ausführungsform des erfindungsgemäßen Verfahrens wird nachfolgend anhand der Figuren näher erläutert. Es zeigt:
- Figur 1: den Druckverlauf von Saugrohrdruck und Abgasgegendruck über dem Kurbelwellenwinkel und
- Figur 2: den Aufbau von Einlass- und Auslasskonfiguration einer Brennkraftmaschine mit Lader.

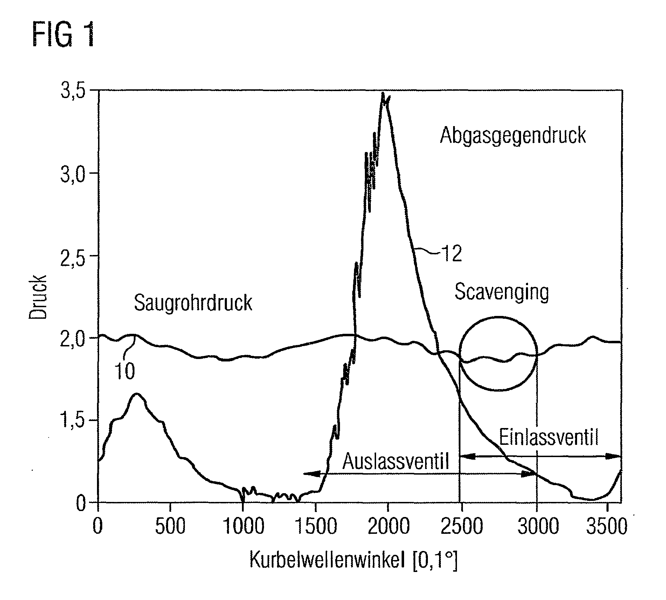

Figur 1 verdeutlicht beispielhaft den Druckverlauf abhängig von dem Kurbelwinkel, der in Figur 1 in 0,1° Schritten des Kurbelwellenwinkels aufgetragen wird. Der Saugrohrdruck 10 verläuft hierbei im Wesentlichen konstant. Anders entwickelt sich der Abgasgegendruck 12 über der Zeit, der im Bereich des geöffneten Gasauslassventils, bei einem Kurbelwellenwinkel von ungefähr 150° bis 300° ein deutliches Maximum annimmt.

Das Einlassventil ist in einem Winkelbereich von ungefähr 250° bis 360° geöffnet, sodass im Bereich von 250° bis ungefähr 300° eine Überlappung entsteht. In diesem Bereich ist der Saugrohrdruck 10 deutlich größer als der Abgasgegendruck, sodass Frischluft aus dem Ansaugtrakt durch den Brennraum in den Abgastrakt gespült wird. (Der Spülvorgang wird auch als

Scavenging bezeichnet).

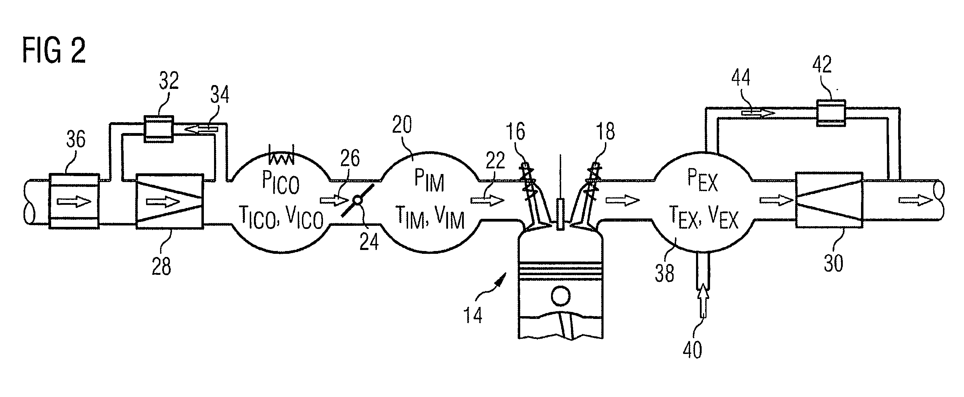

Diese Funktionsweise wird anhand des in Figur 2 wiedergegebenen schematischen Aufbaus deutlich. Ein Zylinder 14 besitzt ein Einlassventil 16 und ein Auslassventil 18, die die Gaswechselventile bilden. Die Ventilüberschneidung zwischen Auslass- und Einlassventil kann beispielsweise über ein IVVT-System (infinitely variable valve timing) stufenlos eingestellt werden.

Die in den Brennraum eintretende Luftmasse wird in dem Einlass 20 durch die Zustandsgrößen Druck, Temperatur und Volumen (p_{IM}, T_{IM}, V_{IM}) beschrieben. Aus diesen Größen wird ein Massestrom 22 in den Zylinder (dm_{cyl}/dt) bestimmt.

Reguliert wird der Massenstrom in dem Einlasstrakt durch eine schematisch dargestellte Drosselklappe 24, durch die ein Drosselklappenluftmassenstrom (dm_{THR}/dt) tritt.

Aufgeladen wird die Brennkraftmaschine durch einen Lader 28, der durch die abgasseitig angeordnete Turbine 30 angetrieben wird. In einem Bypass zu dem Lader 28 ist ein Rücklaufventil 32 vorgesehen, durch das ein rückfließender Luftmassestrom (dm_{TCL}/dt) zurück auf die Ansaugseite des Laders fließt. Beispielhaft ist dem Lader noch ein Luftfilter 36 vorgeordnet.

Abgasseitig von dem Zylinder 14 wird der Zustand der Abgase durch Druck, Temperatur und Volumen (p_{EX}, T_{EX}, V_{EX}) beschrieben. Dem Abgas kann noch ein sekundärer Luftstrom 40 zugeführt werden. Über ein Wastegate 42 kann ein Luftmassenstrom (dm_{WG}/dt) an der Turbine 30 vorbeigeführt werden.

Stromabwärts von der Turbine 30 befindet sich ein Abgaskatalysator (nicht dargestellt), aus dessen Messwerten der Lambda-Wert für das Luft-/Kraftstoffgemisch in dem Zylinder 14 berechnet wird.

Bei der dargestellten Ein- und Auslasskonfiguration erfolgt bevorzugt eine Direkteinspritzung von Kraftstoff, die sicherstellt, dass der Beginn der Einspritzung nach Schließen des Auslassventils erfolgt. Damit wird sichergestellt, dass nur Frischluft ohne Kraftstoff zur Abgasseite bei einer Ventilüberschneidung gespült wird.

Durch die zusätzliche Spülluft wird der Massenstrom durch die abgasseitig angeordnete Abgasturbine 30 erhöht, wodurch sich die erzielbare Maximalleistung und das dynamische Verhalten eines Turboladers deutlich verbessern. So kann insbesondere für geringe Motordrehzahlen das Ansprechverhalten des Abgasturboladers verbessert werden.

Im volllastnahen Betrieb einer aufgeladenen Brennkraftmaschine bewirkt die bei einer Ventilüberschneidung zur Abgasseite gespülte Frischluft einer Erhöhung des Durchsatz durch die Brennkraftmaschine, ohne an der Verbrennung teilzunehmen. Es treten dabei insbesondere die folgenden Vorteile für das Betriebsverhalten auf:
● Bei einem Lambda-Wert λ_{EX}=1 findet bei Spülluft eine Verbrennung im Zylinder mit einem Lambda-Wert λ_{CYL}<1 statt. Durch die Verbrennung im Fetten wird die Klopfneigung reduziert.
● λ_{CYL}<1 bewirkt einen sehr hohen CO- und HC-Anteil im Abgas. Gleichzeitig sorgt der Spülluftanteil für einen hohen Restsauerstoffgehalt und bewirkt so einen internen Sekundärlufteffekt. Die resultierende Abgaszusammensetzung bewirkt eine hohe Exothermie im Abgaskatalysator und beschleunigt so seine Aufheizung.
● Durch Spülen wird der Restgasanteil im Brennraum und somit die Klopfneigung vermindert. Die Minimierung des Restgasanteils ist bei Betrieb nahe der Voll-Last von entscheidender Bedeutung, um eine maximale Zylinderfüllung zu erreichen und diese Füllung auch effektiv, das heißt mit günstiger Verbrennungsschwerpunktlage, umzusetzen.
● Die zusätzliche Spülluftmenge erhöht den Massenstrom durch die Turbine, wodurch bei niedrigen Motordrehzahlen sowohl das Ansprechverhalten, als auch die erreichbare Maximalleistung gesteigert werden können.

Die durch den Zylinder 14 gespülte Luftmasse hängt im Wesentlichen von der Druckdifferenz p_{IM} und p_{EX} ab. Unterstützt wird dieser Effekt auch durch möglicherweise auftretende Resonanzen im Saugrohr, die sogar bei niedrigerem Saugrohrdruck bereits zum Spülen führen können. Im Falle des Spülens kann bei ungenauer Prädiktion der im Zylinder verbleibenden Luftmasse eine Abweichung im Lambda-Signal vom Sollwert auftreten. Diese Abweichung geht ursächlich auf die analog zur Luftmasse zugemessene Kraftstoffmasse zurück. Im Falle einer Abweichung der Luftmasse vom Prädiktionswert wird auch die Einspritzmenge entsprechend über Lambda korrigiert. Diese Abweichung wird aber hauptsächlich durch den Abgasgegendruck hervorgerufen, da der Hauptzusammenhang auf dem Druckgefälle beruht. Für die Steuerung wird daher der Wert des Abgasgegendrucks aufgrund der gemessenen Lambda-Werte korrigiert.

Mit dem korrigierten Wert für den Abgasgegendruck ist auch eine genauere Ansteuerung des Wastegates 42 für den Turbolader 30 möglich.

## Patentansprüche

1. Verfahren zur Steuerung einer Brennkraftmaschine mit einer Aufladevorrichtung (28, 30), bei dem
- eine Abweichung des Lambda-Ist-Wertes von einem vorberechneten Lambda-Wert festgestellt wird,
- für eine Ventilüberschneidung, bei der Gaswechselventile des Brennraums gleichzeitig geöffnet sind, der Wert für den Abgasgegendruck abhängig von der festgestellten Abweichung korrigiert wird und
- mit dem korrigierten Wert für den Abgasgegendruck die Luftmasse in dem Zylinder bestimmt wird.

2. Verfahren nach Anspruch 1, **dadurch gekennzeichnet, dass** die Korrektur für den Wert des Abgasgegendrucks erfolgt, wenn der Ansaugdruck im Saugrohr während der Ventilüberschneidung größer als der Abgasgegendruck ist.

3. Verfahren nach Anspruch 1 oder 2, **dadurch gekennzeichnet, dass** die Korrektur für den Wert des Abgasgegendrucks erfolgt, wenn der Quotient aus Saugrohrdruck und Abgasgegendruck größer als ein vorbestimmter Schwellwert ist.

4. Verfahren nach Anspruch 1 oder 2, **dadurch gekennzeichnet, dass** die Korrektur für den Wert des Abgasgegendrucks erfolgt, wenn die Differenz aus Saugrohrdruck und Abgasgegendruck einen vorbestimmten Schwellenwert überschreitet.

5. Verfahren nach einem der Ansprüche 1 bis 4, **dadurch gekennzeichnet, dass** der Wert für den Abgasgegendruck durch ein Steuermodul berechnet wird, das als Eingangsgröße die Frischluftmasse, die Einspritzmasse und die Position eines Wastegates (42) aufweist.

6. Verfahren nach einem der Ansprüche 1 bis 5, **dadurch gekennzeichnet, dass** der Wert für den Abgasgegendruck vermindert wird, wenn der Lambda-Ist-Wert kleiner als der Lambda-soll-wert ist.

7. Verfahren nach einem der Ansprüche 1 bis 5, **dadurch gekennzeichnet, dass** der Wert für den Abgasgegendruck erhöht wird, wenn der Lambda-Ist-Wert größer als der Lambda-Soll-Wert ist.

8. Verfahren nach einem5der Ansprüche 1 bis 7, **dadurch gekennzeichnet, dass** die Korrektur für den Wert des Abgasgegendrucks während der Ventilüberschneidung erfolgt.

9. Verfahren nach einem der Ansprüche 1 bis 7, **dadurch gekennzeichnet, dass** die Korrektur für den Wert des Abgasgegendrucks für die nachfolgende Ventilüberschneidung erfolgt.

## Claims

1. Method for controlling a supercharged (28, 30) internal combustion engine, with
- a deviation of the lambda actual value from a calculated lambda value being detected,
- with the value for the exhaust back pressure being corrected relative to the detected deviation in the event of a valve overlap where gas exchange valves of the combustion chamber open simultaneously and
- with the air volume in the cylinder being determined by the corrected value for the exhaust back pressure.

2. Method in accordance with claim 1, **characterised in that** the correction for the value of the exhaust back pressure takes place if the intake pressure in the intake manifold is greater than the exhaust back pressure during the valve overlap.

3. Method in accordance with claim 1 or 2, **characterised in that** the correction for the value of the exhaust back pressure takes place if the quotient of the intake manifold pressure and exhaust back pressure is greater than a calculated threshold value.

4. Method in accordance with claim 1 or 2, **characterised in that** the correction for the value of the exhaust back pressure takes place if the difference between the intake manifold pressure and exhaust back pressure exceeds a predetermined threshold value.

5. Method in accordance with one of claims 1 to 4, **characterised in that** the value for the exhaust back pressure is calculated by a control module that uses the fresh air volume, the injected volume and the position of a wastegate (42) as input variables.

6. Method in accordance with one of claims 1 to 5, **characterised in that** the value for the exhaust back pressure is reduced if the lambda actual value is less than the lambda set value.

7. Method in accordance with one of claims 1 to 5, **characterised in that** the value for the exhaust back pressure is increased if the lambda actual value is greater than the lambda set value.

8. Method in accordance with one of claims 1 to 7, **characterised in that** the correction for the value of the exhaust back pressure takes place during the valve overlap.

9. Method in accordance with one of claims 1 to 7, **characterised in that** the correction for the value of the exhaust back pressure takes place for the succeeding valve overlap.

## Revendications

1. Procédé de commande d'un moteur à combustion interne comprenant un dispositif de charge (28, 30), dans lequel
- on détermine un écart entre la valeur lambda réelle et une valeur lambda préalablement calculée,
- pour un croisement des soupapes, lors duquel les soupapes d'échange des gaz de la chambre de combustion sont ouvertes simultanément, on corrige la valeur de la contre-pression des gaz d'échappement en fonction de l'écart déterminé et
- à l'aide de la valeur corrigée de la contre-pression des gaz d'échappement, on détermine la masse d'air dans le cylindre.

2. Procédé selon la revendication 1, **caractérisé en ce que** la correction de la valeur de la contre-pression des gaz d'échappement s'effectue lorsque la pression d'admission dans la tubulure d'admission, pendant le croisement des soupapes, est supérieure à la contre-pression des gaz d'échappement.

3. Procédé selon la revendication 1 ou 2, **caractérisé en ce que** la correction de la valeur de la contre-pression des gaz d'échappement s'effectue lorsque le quotient de la pression de la tubulure d'admission et de la contre-pression des gaz d'échappement est supérieur à une valeur de seuil prédéterminée.

4. Procédé selon la revendication 1 ou 2, **caractérisé en ce que** la correction de la valeur de la contre-pression des gaz d'échappement s'effectue lorsque la différence entre la pression de la tubulure d'admission et la contre-pression des gaz d'échappement dépasse une valeur de seuil prédéterminée.

5. Procédé selon l'une des revendications 1 à 4, **caractérisé en ce que** la valeur de la contre-pression des gaz d'échappement est calculée par un module de commande qui présente en tant que grandeur d'entrée la masse d'air frais, la masse d'injection et la position d'une soupape de décharge (42).

6. Procédé selon l'une des revendications 1 à 5, **caractérisé en ce que** la valeur de la contre-pression des gaz d'échappement est réduite lorsque la valeur lambda réelle est inférieure à la valeur lambda de consigne.

7. Procédé selon l'une des revendications 1 à 5, **caractérisé en ce que** la valeur de la contre-pression des gaz d'échappement est augmentée lorsque la valeur lambda réelle est supérieure à la valeur lambda de consigne.

8. Procédé selon l'une des revendications 1 à 7, **caractérisé en ce que** la correction de la valeur de la contre-pression des gaz d'échappement s'effectue pendant le croisement des soupapes.

9. Procédé selon l'une des revendications 1 à 7, **caractérisé en ce que** la correction de la valeur de la contre-pression des gaz d'échappement s'effectue pour le croisement des soupapes suivant.
